# EUROPEAN PATENT APPLICATION

(11) **EP 3 034 174 A1**
(43) Date of publication of application: **22.06.2016**
(21) Application number: 15460060.5
(22) Date of filing: 31.08.2015
(51) Int. Cl.: B03C 3/15, B03C 3/40, B03C 3/41, B03C 3/45

(54) **CYCLONIC FILTER WITH AN AUXILIARY ELECTROSTATIC UNIT**

(30) Priority: 08.12.2014 UA 2014013110
(71) Applicant: Svoboda Piotr Slebioda, 76-200 Slupsk (PL)
(72) Inventor: Slebioda, Piotr, 62-002 Suchy Las (PL)
(74) Representative: Luczak, Jerzy

(57) **Abstract**

The claimed invention relates to cyclone type filtration device with an auxiliary electrostatic unit for dry cleaning of dust and gases to use in chemical industry, food, metallurgy, wood processing, etc.

The cyclofilter with an auxiliary electrostatic unit is composed of a cylindrical housing: a cyclone (1) with a conical bottom (2), a discharge electrode (3) and a precipitation electrode (5), a polluted gas outlet duct and a cleaned gas (6) inlet duct. The ionizing electrode (3) has a form of a spiral blade installed on the outer wall of the cleaned gas (6) outlet duct.

In the lower part of the cyclone is installed an internal support structure with elastic slings (8). On the elastic slings (8) is mounted the precipitation electrode (5), made in a shape of a spring.

## Description

The claimed invention relates to cyclone type filtration device with an auxiliary electrostatic unit for dry cleaning of dust and gases to use in chemical industry, food, metallurgy, wood processing, etc.

Among the various known methods of dry cleaning of industrial gases from dust the greatest efficiency trapping fine particles (up to 5 microns) is achieved by bag filters and electrostatic precipitator. Or there is a lot of existing types of equipment based on the centrifugal and electrostatic (electro-precipitator) principle. The bag filter is very efficient separator, however its use is limited by the nature of the filter bag material, as it is now for the maximal gas temperature about 250oC, mechanical and electrostatic separators can operate on much higher gas temperature what is very cost effective.

The electro-precipitator filters can be classified as single zone and multi zones (depending of the situation of the ionizing and precipitating electrodes), tubular or plate (depending of the form of the precipitating electrode), horizontal or vertical (following the main direction of the gas flow).

For example, a known device for gas filtration EP 0995494, which consists of a cylindrical body - cyclone with a conical bottom, a polluted gas inlet duct, cleaned gas outlet duct with a cylindrical rod.

A cylindrical rod is installed coaxially to the cleaned gas outlet duct and acts as a ionizing electrode. Wherein the cleaned gas outlet duct itself is a precipitating electrode.

In other embodiment in the cleaned gas outlet duct are installed cylindrical shape plates, one of which is connected to a cylindrical core and together act as a corona charger, and others - are combined with each other and function as precipitation electrodes.

This unit works as follows. The polluted gas from the polluted gas inlet duct passes to the cyclone. Under the influence of centrifugal force, the process of separating the solid particles is taking place, which accumulate on the cyclone walls than fall to the dust collecting part than is evacuated by an conveyor. As the gas is still loaded partly with solid particles, the gas is ionized by the corona charger. Charged particles are attracted to the precipitation electrodes.

However, this device in all embodiments has the same significant drawback - the location of the precipitation electrodes, allocated in the cleaned gas outlet duct where the speed of the gas flow is even greater and directed in opposition to the particles fall. Consequently once captured by electrodes dust instead of falling down is taken up with the gas stream.

The closest to the claimed invention is a device for separating solid particles from gas WO 2012/139642, which consists of a cylindrical body - cyclone with conical bottom, a collector, a cleaned gas outlet duct and a polluted gas inlet duct in which is tangentially installed a corona charger.

Wherein the device housing serves as precipitation electrode. Also, an additional ionizing electrode is installed in the cleaned gas outlet duct.

In another embodiment, for a better cleaning process, an additional precipitation electrode is installed in the cleaned gas outlet duct.

The device works as follows. The incoming polluted gas passes through the polluted gas inlet duct, where is ionized by the ionizing electrode. Next, the ionized gas passes to the cyclone where is additionally ionized by the cleaned gas outlet duct.

Solid particles under the centrifugal force accumulate on the cyclone wall, next, by gravitation and slight vibration, fall to the conical bottom of the cyclone being the dust collector. The cleaned gas is evacuated from the cyclone and the solid particles are deposed on the additional accumulation elements, the precipitation electrodes.

This unit in all versions also has a significant drawback - the dust accumulated on the precipitation electrodes inside the cleaned gas outlet duct can not fall down against the upward direction of the gas.

As a base for this invention is a task to create a cyclofilter with a modified design of the cyclones and the housing which enables to increase the efficiency of the gas cleaning process with an option to treat high temperature gases.

The problem is solved in the present invention by a cyclofilter with an auxiliary electrostatic unit which consist of a cyclone housing being a cyclone with a conical bottom part, lionization and precipitation electrodes, the ionizing one mounted on external wall of a cleaned gas outlet duct, as a prolongation of the polluted gas inlet duct. The precipitation electrode has a shape of a spring, it is installed in the lower part of the cyclone housing, supported by an internal support construction on flexible slings.

The present invention, in an exemplary, but not exhaustive embodiment, is visualized in the drawings:

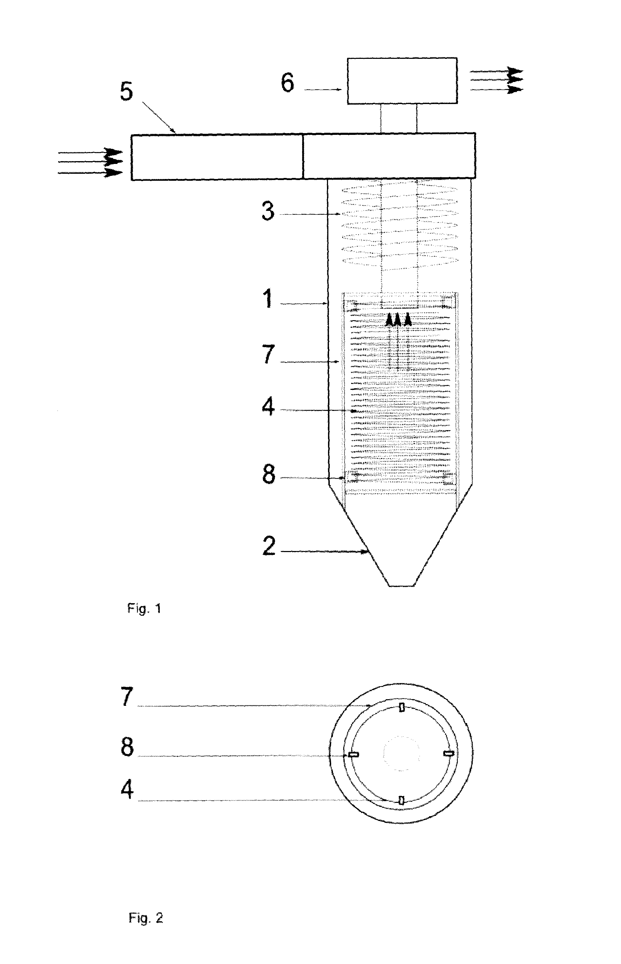

Figure 1 - a general view of the cyclofilter with an auxiliary electrostatic unit.
Figure 2 - section A-A of Figure 1

The cyclofilter with an auxiliary electrostatic unit is composed of a cyclone housing 1 with a conical bottom 2, a discharge electrode 3., a precipitation electrode 4, connected to the cyclone housing a polluted gas inlet duct 5 and a cleaned gas outlet duct 6 installed in the upper part of the housing.

The discharge electrode 3 has a shape of a spiral blade and is installed on the outer wall of the cleaned gas outlet duct 6. In the lower part of the cyclone housing 1 is installed an internal support structure 7 with flexible slings 8. The flexible slings 8 support the precipitation electrode 5 designed as a spring.

The cyclofilter with an auxiliary electrostatic unit works as follows. The polluted gas passes to the cyclone housing 1 through the polluted gas inlet duct 5. The gas passes by the ionizing electrode 3, get ionized than arrives in the middle of the cyclone housing 1. Most of solid particles, under the centrifugal force, accumulate on the inner wall of the cyclone housing 1, additionally, being attracted by the precipitation electrode 4, part of the particles accumulate on this electrode too. Then, solid particles fall, by gravitation as it concerns the inner walls of the cyclone housing 1, by gravitation and vibration, as it concerns the precipitation electrode 4 mounted on the flexible slings 8 on the internal support structure 7, to the bottom part of the cyclone than is evacuated from the cyclofilter.

The cleaned gas is evacuated from the cyclone through the cleaned gas outlet duct 6.

The spiral blade shape of the ionizing electrode, installed on the outer wall of the outlet duct as a prolongation of the gas inlet, has a double impact, first, it helps the gas to form more whirled way through the cyclone, enhancing the centrifugal force, the second impact is a longer contact of the incoming gas with the ionizing electrode with simultaneous mixing of the gas. The precipitation electrode as it has a shape of a spring mounted on elastic slings gets vibrations from the gas whirl and cleans itself from the accumulated solid particles which fall down to the bottom part of the cyclofilter.

## Claims

1. The cyclofilter with an auxiliary electrostatic unit is composed of a cylindrical housing in a form of a cyclone with a conical bottom, a ionizing electrode and a precipitation electrode, a cleaned gas outlet duct connected to the cyclone housing and a coaxially installed polluted gas inlet duct, **characterized in that** the ionizing electrode (3) has a form of a spiral blade placed on the outer wall of the cleaned gas (6) outlet duct wherein the precipitation electrode (5) has a form of a spring and it is installed on elastic slings of an internal support (8) structure, placed in the lower part of the cyclone (1).
